# EUROPÄISCHE PATENTANMELDUNG

(11) **EP 4 342 277 A1**
(43) Veröffentlichungstag der Anmeldung: **27.03.2024**
(21) Anmeldenummer: 23401036.1
(22) Anmeldetag: 06.09.2023
(51) Int. Cl.: A01C 7/12, A01C 19/00, A01C 21/00, A01C 7/08

(54) **SÄMASCHINE UND VERFAHREN ZUM AUSBRINGEN VON SAATGUT**

(30) Priorität: 23.09.2022 DE 102022124473
(71) Anmelder: Amazonen-Werke H. Dreyer SE & Co. KG, 49205 Hasbergen (DE)
(72) Erfinder: Wien, Thomas, 28816 Stuhr (DE); Lübben, Jan-Eike, 26188 Edewecht (DE); Weinland-Wilken, Henning Oltmann, 26160 Bad Zwischenahn (DE)

(57) **Zusammenfassung**

Die Erfindung betrifft eine Sämaschine (1) zum Ausbringen von Saatgut auf einer landwirtschaftlichen Nutzfläche (N), mit einem Vorratsbehälter (2) zur Aufnahme des Saatguts, mit mehreren nebeneinander angeordneten Dosiereinheiten (3, 3a, 3b, 3g), welche jeweils mindestens ein frei drehbar um eine Lagerachse (A) gelagertes Dosierrad (3.1) aufweisen, und von den Dosiereinheiten (3, 3a, 3b, 3g) mit Saatgut versorgbaren Säeinheiten (4) zur Aussaat des Saatguts, wobei den frei drehbar gelagerten Dosierrädern (3.1) der mehreren nebeneinander angeordneten Dosiereinheiten (3, 3a, 3b, 3g) jeweils mehrere Säwellen (5, 15) zum wahlweisen Antrieb der Dosierräder (3.1) zugeordnet sind.

## Beschreibung

Die Erfindung betrifft eine Sämaschine zum Ausbringen von Saatgut auf einer landwirtschaftlichen Nutzfläche, mit einem Vorratsbehälter zur Aufnahme des Saatguts, mit mehreren nebeneinander angeordneten Dosiereinheiten, welche jeweils mindestens ein frei drehbar um eine Lagerachse gelagertes Dosierrad aufweisen, und von den Dosiereinheiten mit Saatgut versorgbaren Säeinheiten zur Aussaat des Saatguts. Einen weiteren Gegenstand der Erfindung bildet ein Verfahren zum Ausbringen von Saatgut auf einer landwirtschaftlichen Nutzfläche.

Solche Sämaschinen weisen einen Vorratsbehälter zur Aufnahme des auszubringenden, oftmals körnigen oder granularen Saatguts auf, der zum Transport des Saatguts zur Nutzfläche und/oder zur Bevorratung des Saatguts während der Aussaat häufig nach Art eines großvolumigen, tankartigen Gefäßes ausgeführt ist.

Unter dem Begriff "Saatgut" sollen in diesem Zusammenhang alle in der Landwirtschaft einsetzbaren körnigen oder granularen Materialien zusammengefasst werden, insbesondere auch Dünger usw. Als "Aussaat" soll nachfolgend das Ausbringen sämtlicher derartiger Materialien auf Nutzflächen bezeichnet werden.

Zur Aussaat des Saatguts werden entsprechende Sämaschinen in der Regel reihenweise und/oder rasterartig bzw. in mehreren parallelen Arbeitsbahnen über die Nutzfläche gefahren, indem diese beispielsweise von einer landwirtschaftlichen Zugmaschine gezogen werden. Beim Erreichen des Endes einer Arbeitsbahn, insbesondere am Ende der Nutzfläche, wendet die Sämaschine und fährt entlang der direkt angrenzenden nächsten Arbeitsbahn über die Nutzfläche. Auf diese Weise wird die Nutzfläche alternierend entlang entgegengesetzter Fahrtrichtungen abgefahren.

Sämaschinen weisen in der Regel zahlreiche Säeinheiten auf, über welche das Saatgut zur Erzeugung einer sich in Fahrtrichtung erstreckenden Saatreihe auf der Nutzfläche ausgebracht wird. Je Arbeitsbahn werden durch die mehreren Säeinheiten mehrere Saatreihen erzeugt. Die auszubringende Menge des Saatguts hängt dabei von unterschiedlichen Faktoren, wie beispielsweise der Art und Beschaffenheit des Saatguts und der Beschaffenheit der Nutzfläche oder der Fahrgeschwindigkeit der Sämaschine ab.

Um eine gleichmäßige Dosierung des Saatguts während des Ausbringens und damit ein gleichmäßiges Saatbild zu ermöglichen, weisen solche Sämaschinen in der Regel mehrere nebeneinander angeordnete Dosiereinheiten zur Dosierung des Saatguts auf, welche dem Vorratsbehälter entlang des Saatgutstroms nachgeschaltet sind. Diese Dosiereinheiten versorgen die Säeinheiten mit Saatgut.

Die Dosierung des Saatguts in der jeweiligen Dosiereinheit erfolgt in der Regel mittels mindestens eines Dosierrads. Ein solches Dosierrad weist über dessen Umfang verteilte Nockenmitnehmer bzw. Dosierkammern zur Mitnahme des aus dem Vorratsbehälter stammenden Saatguts auf, wobei die zu dosierende Menge des Saatguts über die Drehgeschwindigkeit des Dosierrads einstellbar ist. Zur flächigen Aussaat dosiert jede der nebeneinander angeordneten Dosiereinheiten das Saatgut, welches in eine der sich in Fahrtrichtung der Sämaschine parallel zueinander erstreckenden Saatreihen ausgesät werden kann.

Dieses Dosierrad kann drehfest auf einer Antriebswelle angeordnet sein, um direkt von dieser Antriebswelle angetrieben zu werden. Alternativ hierzu kann das Dosierrad frei drehbar um eine Lagerachse gelagert sein, so dass es sich relativ zur Lagerachse und von dieser uneingeschränkt drehen kann, wobei der Antrieb nicht über die Lagerachse erfolgt.

Eine Sämaschine mit Dosiereinheiten, deren Dosierräder um eine Lagerachse frei drehbar gelagert sind, ist aus der DE 10 2013 108 340 A1 bekannt. Die Dosiereinheiten mit diesen frei drehbar gelagerten Dosierrädern dienen in der Praxis zur Erzeugung einer im späteren Pflanzenbestand nutzbaren Fahrgasse. Angetrieben werden sie durch eine gemeinschaftliche, außerhalb der Dosiereinheiten liegenden Welle. Durch eine Antriebsfreischaltung der Welle können diese Dosiereinheiten während der Aussaat gruppenweise abgeschaltet werden. Eine solche Sämaschine gestattet es jedoch nur, die festgelegte Gruppe aus in gleicher Weise ausgestalteten und angetriebenen Dosiereinheiten gemeinschaftlich aus- oder einzuschalten. Die Flexibilität dieser Sämaschine hinsichtlich des mit ihr erzeugbaren Saatbildes ist daher sehr eingeschränkt. Sie beschränkt sich auf einen ersten Betriebszustand, in welchem das Saatbild entlang der Arbeitsbahn eine Fahrgasse aufweist, und einen zweiten Betriebszustand, in welchem das Saatbild entlang der Arbeitsbahn im Gegensatz hierzu keine Fahrgasse aufweist. Eine Veränderung des Abstands der Saatreihen, in denen Saatgut ausgebracht ist, gestatten die Dosiereinheiten solcher Sämaschinen nicht.

Daher stellt sich die vorliegende Erfindung die **Aufgabe**, eine Sämaschine mit gesteigerter Flexibilität hinsichtlich des von ihr erzeugbaren Saatbildes anzugeben.

Diese Aufgabe wird bei einer Maschine der eingangs genannten Art durch die Merkmale des Patentanspruchs 1 **gelöst**. Vorteilhafte Weiterbildungen sind in den abhängigen Unteransprüchen angegeben.

Indem den frei drehbar gelagerten Dosierrädern der mehreren nebeneinander angeordneten Dosiereinheiten jeweils mehrere Säwellen zum wahlweisen Antrieb zugeordnet sind, kann das jeweilige Dosierrad der Dosiereinheit über unterschiedliche Säwellen angetrieben werden. Für jede Dosiereinheit lässt sich wählen, welche der Säwellen das mindestens eine Dosierrad antreibt. Die Dosierräder verschiedener Dosiereinheiten können auf diese Weise wahlweise über unterschiedliche Säwellen, insbesondere in unterschiedlicher Weise, angetrieben werden. Insbesondere während eine der Säwellen zum Antrieb eines Dosierrads genutzt wird, können die anderen der dem Dosierrad zugeordneten Säwellen zeitweise nicht zum Antrieb dieses Dosierrads genutzt werden. Indem gewählt werden kann, über welche der Säwellen das mindestens eine, frei drehbar gelagerte Dosierrad angetrieben wird, welchem die mehrere Säwellen zugeordnet sind, kann die Flexibilität der Sämaschine hinsichtlich des von ihr erzeugbaren Saatbildes gesteigert werden.

Die Dosierräder, welchen die mehreren Säwellen zugeordnet sind, insbesondere die jene Dosierräder aufweisenden Dosiereinheiten, können durch die Wahl, welche der Säwellen zu ihrem Antrieb genutzt werden, frei gruppiert werden. Die Anzahl der erzielbaren Gruppen kann durch die Anzahl der den Dosierrädern zugeordneten Säwellen nach oben begrenzt werden.

Beispielsweise können die über eine erste Säwelle angetriebenen Dosierräder je Arbeitsbahn im Wechsel mit jenen Dosierrädern betrieben werden, welche über eine zweite Säwelle angetrieben werden. Insbesondere wenn die Dosierräder jeder zweiten Dosiereinheit von der zweiten Säwelle angetrieben werden, kann auf diese Weise ein Saatbild erzeugt werden, bei welchem der Abstand der Saatreihen, in welchen Saatgut ausgebracht wird, je Arbeitsbahn erhöht wird. Zugleich können die durch einen solchen Wechselbetrieb mit alternierender Antriebsreihenfolge nach dem Wenden entstehenden Lücken oder Dopplungen mit den Saatreihen der vorherigen und/oder nächsten Arbeitsbahn verhindert werden. Dabei können die Dosierräder bei der Fahrt entlang einer ersten Arbeitsbahn zusammen mit der ersten Säwelle ruhen, während die von der zweiten Säwelle angetriebenen Dosierräder rotieren. Bei der Fahrt entlang der folgenden zweiten Arbeitsbahn können die zuvor ruhenden Dosierräder von der ersten Säwelle angetrieben werden und rotieren, während die zuvor von der zweiten Säwelle angetriebenen Dosierräder zusammen mit der zweiten Säwelle ruhen.

Ebenso können die über eine erste Säwelle angetriebenen Dosierräder beispielsweise mit unterschiedlichen Drehzahlen zu jenen Dosierrädern betrieben werden, welche über eine zweite Säwelle angetrieben werden. Auf diese Weise kann ein Saatbild erzeugt werden, bei welchem sich die in die unterschiedlichen Saatreihen einer Arbeitsbahn ausgebrachten Saatgutmengen voneinander unterscheiden. Zu diesem Zweck können die erste und die zweite Säwelle mit unterschiedlichen Drehzahlen betrieben werden. Dieser Betrieb der Dosierräder mit unterschiedlichen Drehzahlen kann beispielsweise zum gleichzeitigen Ausbringen unterschiedlichen Saatguts entlang einer Arbeitsbahn genutzt werden, bei welchem das eine Saatgut durch die über die erste Säwelle angetriebenen Dosierräder und das andere Saatgut durch die über die zweite Säwelle angetriebenen Dosierräder dosiert wird.

Die mehreren nebeneinander angeordneten Dosiereinheiten, deren mindestens einem, frei drehbar gelagertem Dosierrad jeweils mehrere Säwellen zugeordnet sind, können im Wesentlichen baugleich ausgestaltete Dosiereinheiten sein.

Die Sämaschine kann in einem Ausführungsbeispiel weitere Dosiereinheiten aufweisen, welche insbesondere von nur einer Welle angetrieben werden. Diese weiteren Dosiereinheiten können anders ausgestaltete Dosiereinheiten als die Dosiereinheiten sein, deren Dosierrädern jeweils mehrere Säwellen zugeordnet sind.

Gemäß einem bevorzugten Ausführungsbeispiel der Erfindung sind sämtliche Dosiereinheiten der Sämaschine gleich ausgestaltet. Insbesondere weist jede Dosiereinheit mindestens ein Dosierrad auf, welchem mehrere Säwellen zugeordnet sind.

Die mehreren nebeneinander angeordneten Dosiereinheiten können neben dem Dosierrad, welchem mehrere Säwellen zugeordnet sind, ein oder mehrere weitere Dosierräder aufweisen. Diesen weiteren Dosierrädern können ebenfalls mehrere Säwellen zugeordnet sein, insbesondere können ihnen die gleichen Säwellen wie dem ersten Dosierrad der Dosiereinheit zugeordnet sein. Gleichwohl können diesen weiteren Dosierrädern auch nicht mehrere Säwellen zugeordnet sein, insbesondere kann ihnen nur eine einzelne Antriebswelle zugeordnet sein.

In vorteilhafter Weise fällt die Lagerachse mit keiner der mehreren Säwellen zusammen. Die Lagerung und der Antrieb der Dosierräder, welchen mehrere Säwellen zugeordnet sind, kann auf diese Weise getrennt voneinander erfolgen.

In einer vorteilhaften Ausgestaltung der Erfindung sind die Säwellen separat angetrieben. Mit den separat angetriebenen Säwellen können die Dosierräder, insbesondere zeitgleich, mit unterschiedlichen Drehzahlen angetrieben werden, abhängig davon, über welche der ihnen zugeordneten Säwellen sie jeweils angetrieben werden. Eine erste Gruppe der Dosierräder, welchen mehrere Säwellen zugeordnet sind, kann auf diese Weise mit einer ersten Drehgeschwindigkeit und eine zweite Gruppe dieser Dosierräder mit einer zweiten Drehgeschwindigkeit betrieben werden. Insbesondere können beide Drehgeschwindigkeiten von Null verschieden sein. Auf diese Weise können die einzelnen Dosierräder, welchen mehrere Säwellen zugeordnet sind, auf unterschiedlich zu dosierende Mengen des Saatguts eingestellt und dennoch gleichzeitig betrieben werden.

Bevorzugt ist jeder Säwelle ein Antriebsmotor zum Antrieb der Säwelle zugeordnet. Indem jeder Säwelle ein eigener Antriebsmotor zugeordnet ist, können die Säwellen auf einfache Art und Weise separat zueinander angetrieben werden.

In vorteilhafter Weise weisen die Säwellen jeweils ein Antriebsmittel auf, über welches die Säwelle jeweils angetrieben werden kann. Über das Antriebsmittel kann die Säwelle mit dem ihr zugeordneten Antriebsmotor, insbesondere über ein Abtriebsmittel des Antriebsmotors, in Antriebsverbindung stehen. Das Antriebsmittel der Säwelle kann vorzugsweise eine Kupplung aufweisen, mit welcher die Säwelle vom Antriebsmotor entkoppelt und/oder antriebsfrei geschaltet werden kann. Das Antriebsmittel der Säwelle und das Abtriebsmittel des Antriebsmotors können insbesondere als ineinander eingreifende Zahnräder ausgestaltet sein.

Bei einer bevorzugten Ausgestaltung der Erfindung sind die Säwellen über Koppelelemente, insbesondere Zahnräder, wahlweise mit dem Dosierrad in kraft- und/oder drehmomentübertragender Weise koppelbar. Über die Koppelelemente können die Säwellen auf einfache Art und Weise mit dem Dosierrad gekoppelt werden, welchem diese Säwellen zugeordnet sind. Durch den Einsatz von Koppelelementen kann auf einfache Weise eine dahingehende Auswahl ermöglicht werden, über welche der ihm zugeordneten Säwellen das Dosierrad angetrieben wird. Die Ausgestaltung der Koppelelemente als Zahnräder kann, insbesondere bei einer nicht mit der Lagerachse zusammenfallenden Säwelle, auf einfache Weise eine wahlweise Kopplung der Säwelle mit dem Dosierrad ermöglichen.

In einer weiteren konstruktiven Ausgestaltung weisen die Dosiereinheiten, insbesondere seitlich aus Dosiergehäusen der Dosiereinheiten herausgeführte, Antriebselemente zum Antrieb der frei drehbar um die Lagerachse gelagerten Dosierräder auf. Über die Antriebselemente können die Dosierräder, welche insbesondere im Inneren eines Dosiergehäuses gelagert sind, auf einfache Weise von außerhalb des Dosiergehäuses angetrieben werden. Durch das Antriebselement einer Dosiereinheit kann zum Antrieb des Dosierrads die Dosiereinheit in Rotation versetzt werden. Diese Rotation kann von dem Antriebselement auf eine Dosierwelle übertragen werden, welche die Rotation wiederum auf das Dosierrad überträgt. Antriebselement, Dosierwelle und/oder Dosierrad können einstückig oder als miteinander verbundene Elemente ausgestaltet sein. Das Antriebselement kann insbesondere als ein Zahnrad ausgestaltet sein.

In diesem Zusammenhang hat es sich als vorteilhaft erwiesen, wenn die jeweiligen Antriebselemente über die Koppelelemente mit den Säwellen kraftschlüssig und/oder formschlüssig verbindbar sind. Über die kraftschlüssige und/oder formschlüssige Verbindbarkeit der Antriebselemente und der Koppelelemente können die zum Antrieb des Dosierrads dienenden Drehmomente auf einfache Weise von den ihnen zugeordneten Säwellen auf das Dosierrad übertragbar sein. Die Antriebselemente und die Koppelelemente können, insbesondere bei einer Ausgestaltung der Antriebselemente sowie der Koppelelemente als Zahnräder, zur Verbindung der Antriebselemente mit den Säwellen in Eingriff stehen. Die Antriebselemente und die Koppelelemente können eine getriebeartige Verbindung ermöglichen, insbesondere mit einem Übersetzungsverhältnis von Eins.

In Weiterbildung der Erfindung sind die Koppelelemente sämtlicher Säwellen während dem Ausbringen des Saatguts kraftschlüssig und/oder formschlüssig mit den ihnen zugeordneten Antriebselementen verbunden. Das Antriebselement des Dosierrads, welchem mehrere Säwellen zu dessen wahlweisen Antrieb zugeordnet sind, kann auf diese Weise während des Ausbringens des Saatguts weiterhin mit den ihm zugeordneten Koppelelementen der Säwellen verbunden sein, insbesondere mit diesen in Eingriff stehen. Auf ein Lösen der Verbindung zwischen den Koppelelementen und den ihnen zugeordneten Antriebselementen kann so verzichtet werden. Mögliche mit einem solchem Lösen verbundene Fehler und Störungen, wie beispielsweise ein Verschmutzen der Zähne eines nicht mehr mit dem Antriebselement verbundenen Koppelelements, lassen sich auf diese Weise vermeiden.

Bei einer vorteilhaften Ausgestaltung sind die Koppelelemente über einen lösbaren Kraftschluss und/oder einen lösbaren Formschluss an den Säwellen angeordnet. Durch die kraft- und/oder formschlüssige und dennoch lösbare Anordnung der Koppelelemente an der Säwelle können diese wahlweise drehfest an der Säwelle angeordnet oder gegenüber der Säwelle frei drehbar gelagert werden. Hierdurch kann eine der Säwellen aus den mehreren dem Dosierrad zugeordneten Säwellen zum Antrieb des Dosierrads ausgewählt werden. Das dem Dosierrad zugeordnete Koppelelement dieser Säwelle kann zum Antrieb des Dosierrads drehfest an dieser Säwelle angeordnet sein, während die übrigen dem Dosierrad zugeordneten Koppelelemente der übrigen ebenfalls dem Dosierrad zugeordneten Säwellen durch Lösen des Kraft- und/oder Formschlusses von ihren Säwellen gelöst werden. Insbesondere bei Sämaschinen, bei welchen die Koppelelemente während der Aussaat mit dem ihnen zugeordneten Antriebselement verbunden bleiben, kann auf diese Weise eine der Säwellen zum Antrieb des Dosierrads ausgewählt werden, ohne dass die übrigen dem Dosierrad zugeordneten Säwellen einen störenden Einfluss auf den Antrieb durch diese Säwelle haben. Denn durch ihre frei drehende Anordnung können diese Koppelelemente die Säwellen nicht untereinander koppeln.

Ferner ist es vorteilhaft, wenn jedem Koppelelement ein Verbindungsmittel zugeordnet ist, mit welchem zwischen einer drehfesten und einer frei drehbaren Anordnung des Koppelelements an der Säwelle wechselbar ist. Mit einem solchen Verbindungsmittel kann auf einfache Weise zwischen einer kraftschlüssigen und/oder einer formschlüssigen Anordnung des Koppelelements an der Säwelle und einer frei drehbaren Anordnung des Koppelelements an der Säwelle durch Betätigung des Verbindungsmittels hin- und hergewechselt werden. In einer konstruktiven Ausgestaltung kann das Verbindungsmittel nach Art einer Schraube ausgestaltet sein, welches vom Koppelelement aus in die Säwellen eingedreht werden kann. Zur Aufnahme des Verbindungsmittels kann die Säwelle ein Aufnahmeelement, insbesondere in Form einer Nut, einer Durchgangsbohrung, eines Sacklochs oder einer Gewindebohrung aufweisen.

In einer weiteren Ausführungsform der Erfindung weist die Sämaschine eine Vorgelegewelle auf, über welche der Vorgelegewelle zugeordnete Dosierräder zur Bildung einer Fahrgasse während der Aussaat anhaltbar sind. Indem die ihr zugeordneten Dosierräder über die Vorgelegewelle angehalten werden können, lassen sich diese während des Ausbringens des Saatguts stoppen, während die übrigen Dosierräder, denen ebenfalls mehrere Säwellen zugeordnet sind, durch eine dieser Säwellen weiter wahlweise angetrieben werden können. Die Vorgelegewelle kann auf diese Weise ermöglichen, dass einzelne Dosierräder während der Aussaat unabhängig von den übrigen Dosierrädern, welchen mehrere Säwellen zugeordnet sind, zur Bildung von Fahrgassen genutzt werden. Die zum Antrieb der dieser Vorgelegewelle zugeordneten Dosierräder dienenden Antriebselemente können weiterhin mit den ihnen zugeordneten Koppelelementen der Säwellen verbunden sein, wobei die Koppelelemente vorzugsweise frei drehbar an ihren Säwellen angeordnet sind.

Vorzugsweise weist die Vorgelegewelle ein Koppelelement auf, über welche sie wahlweise mit einem ihr zugeordneten Dosierrad koppelbar ist. Diese Kopplung kann unmittelbar zwischen dem Koppelelement der Vorgelegewelle und dem zum Antrieb des ihr zugeordneten Dosierrads dienenden Antriebselements erfolgen. Alternativ kann es sich um eine mittelbare Kopplung, beispielsweise über die Koppelelemente der Säwellen, handeln.

In diesem Zusammenhang hat es sich als vorteilhaft erwiesen, wenn die Vorgelegewelle wahlweise mit einer der Säwellen, insbesondere über eine elektrische Schlingfederkupplung, koppelbar ist. Die wahlweise mit einer der Säwellen koppelbare Vorgelegewelle kann auf diese Weise über die Säwelle angetrieben werden, solange die ihr zugeordneten Dosierräder nicht angehalten werden sollen. Wenn die der Vorgelegewelle zugeordneten Dosierräder angehalten werden sollen, kann die Vorgelegewelle von der Säwelle abgekoppelt werden. Ein solches Abkoppeln kann auf einfache Weise, insbesondere zentral und/oder ferngesteuert, über eine elektrische Schlingfederkupplung erzielt werden. Auf einen eigenständigen Antriebsmotor für die Vorgelegewelle kann auf diese Weise verzichtet werden. Gleichwohl kann die Vorgelegewelle auch einen eigenen Antriebsmotor aufweisen.

Vorzugsweise weist die Vorgelegewelle ein Antriebsmittel auf, über welche sie wahlweise mit einem Antriebsmotor koppelbar ist. Diese Kopplung kann unmittelbar zwischen dem Antriebsmittel der Vorgelegewelle und dem Antriebsmotor oder einem Abtriebsmittel des Antriebsmotors erfolgen. Alternativ kann es sich um eine mittelbare Kopplung handeln, beispielsweise über die Antriebsmittel der Säwellen. In diesem Fall kann das Antriebsmittel der Vorgelegewelle eine Kupplung, insbesondere eine elektrische Schlingfederkupplung, aufweisen, über welche die Vorgelegewelle wahlweise mit einer der Säwellen koppelbar ist.

Bei einer bevorzugten Ausgestaltung der Erfindung weisen die Säwellen jeweils eine Kupplung zum Ankoppeln der Vorgelegewelle auf. Die Vorgelegewelle kann mit der jeweiligen Kupplung der einzelnen Säwellen an diese angekoppelt oder von diesen abgekoppelt werden. Vorzugsweise erfolgt die Ankopplung derart, dass nur eine der mehreren Säwellen mit der Vorgelegewelle gekoppelt wird, um diese anzutreiben, während die Vorgelegewelle über die Kupplungen der übrigen Säwellen von diesen abgekoppelt ist Auf diese Weise können Störungen durch einen gleichzeitigen Antrieb der Vorgelegewelle über mehrere Säwellen vermieden werden. Die Kupplungen der Säwellen können als Teil der Antriebsmittel der Säwellen ausgestaltet sein, insbesondere einstückig mit diesen ausgebildet sein.

Bei einer vorteilhaften Ausgestaltung der Erfindung steht die Vorgelegewelle mit den ihr zugeordneten Dosierrädern über Koppelelemente der Säwellen in Antriebsverbindung. Auf diese Weise können die Koppelelemente der Säwellen im Antriebsstrang zwischen der Vorgelegewelle und den ihr zugeordneten Dosierrädern geschaltet sein. Eine Sämaschine, bei welcher Dosierrädern mehrere Säwellen zum wahlweisen Antrieb zugeordnet sind, kann so in konstruktiv einfacher Weise mit einer Vorgelegewelle zur Bildung einer Fahrgasse nachgerüstet werden.

In diesem Zusammenhang hat es sich als vorteilhaft erwiesen, wenn die Vorgelegewelle, insbesondere ihr Koppelelement, auf der von der Lagerachse abgewandten Seite der Säwellen angeordnet ist.

Vorzugsweise bilden ein Antriebselement eines der Vorgelegewelle zugeordneten Dosierrads, die dem Dosierrad zugeordneten Koppelelemente der Säwellen und ein dem Dosierrad zugeordnetes Koppelelement der Vorgelegewelle ein Getriebe, insbesondere ein Zahnradgetriebe. Das Antriebselement sowie das Koppelelement der Vorgelegewelle können dabei jeweils mit sämtlichen, insbesondere mindestens zwei, der Koppelelemente der Säwellen in Eingriff stehen. Die dem Dosierrad zugeordneten Koppelelemente der Säwellen, insbesondere die mit dem Antriebselement und/oder dem Koppelelement der Vorgelegewelle in Eingriff stehenden Koppelelemente der Säwellen, stehen bei dieser Getriebeanordnung vorzugsweise nicht miteinander in Eingriff. Das Antriebselement, die Koppelelemente der dem Dosierrad zugeordneten Säwellen und das dem Dosierrad zugeordnete Koppelelement der Vorgelegewelle können zueinander in einer rautenförmigen Geometrie angeordnet sein.

Gemäß einer konstruktiven Ausgestaltung wird vorgeschlagen, dass jeder Säwelle eine, insbesondere mit ihr koppelbare, Vorgelegewelle zugeordnet ist. Indem jeder Säwelle eine eigene Vorgelegewelle zugeordnet ist, kann die Bildung einer Fahrgasse für jede Gruppe von Dosiereinheiten, welche von derselben Säwelle angetrieben werden, individuell über die dieser Säwelle zugeordnete Vorgelegewelle gesteuert werden. Insbesondere kann eine Fahrgasse ohne eine hierüber hinausgehende Beeinflussung des Saatbilds auch in Betriebszuständen erzeugt werden, in welchen nur eine Gruppe der Dosierräder, denen mehrere Säwellen zugeordnet sind, über eine der Säwellen angetrieben werden, während die anderen Säwellen und damit auch die anderen Dosierräder momentan nicht angetrieben werden.

Eine weitere Ausgestaltung der Erfindung sieht vor, dass jeder Dosiereinheit ein Rohrleitungsanschluss zum Anschluss einer der Zufuhr des dosierten Saatguts zu einer der Säeinheiten dienenden Rohrleitung zugeordnet ist. Über den Rohrleitungsanschluss kann auf einfache Weise eine Rohrleitung angeschlossen werden, über welche das von der jeweiligen Dosiereinheit dosierte Saatgut einer der Säeinheiten zugeführt wird. Auf diese Weise kann jeder Dosiereinheit eine der Säeinheiten zugeordnet werden. Die jeweiligen Dosiereinheiten können dabei die Dosierung jenes Saatguts vornehmen, welches der ihnen zugeordneten Säeinheit zugeführt und von dieser in die von ihr erzeugte Saatreihe ausgebracht wird. Die Rohrleitungsanschlüsse können einstückig mit den Dosiergehäusen der jeweiligen Dosiereinheiten ausgestaltet sein. Insbesondere können die Rohrleitungsanschlüsse die Ausgänge der Dosiereinheiten bilden. Die Eingänge der Dosiereinheiten können durch Aufnahmeöffnungen gebildet werden, welche auf der in Saatstromrichtung den Rohrleitungsanschlüssen gegenüberliegenden Seiten der Dosierräder liegen.

In einem weiteren Ausführungsbeispiel der Erfindung ist jeder Dosiereinheit und/oder einer Gruppe von Dosiereinheiten eine Vorratskammer des Vorratsbehälters zugeordnet. Indem den Dosiereinheiten einzeln oder in Gruppen Vorratskammern des Vorratsbehälters zugeordnet sind, können mit den einzelnen Dosiereinheiten und/oder Gruppen von Dosiereinheiten jeweils zueinander unterschiedliches Saatgut ausgebracht werden, welche in der jeweiligen Vorratskammer des Vorratsbehälters aufgenommen wird. Da sich die Dosierräder der einzelnen Dosiereinheiten und/oder Gruppen von Dosiereinheiten über die mehreren Säwellen unterschiedlich antreiben lassen, kann die Drehgeschwindigkeit und damit die Dosierungsmenge der Dosierräder dieser Dosiereinheiten und/oder Gruppen von Dosiereinheiten an das jeweilige in der ihnen zugeordneten Vorratskammer aufgenommene Saatgut angepasst werden.

Bevorzugt sind die Dosierräder benachbarter Dosiereinheiten, insbesondere ausgenommen der Dosierräder der einer Vorgelegewelle zugeordneten Dosiereinheiten, zum Antrieb mit unterschiedlichen Säwellen kraftgekoppelt und/oder formgekoppelt. Indem die Dosierräder benachbarter Dosiereinheiten zum Antrieb mit unterschiedlichen Säwellen gekoppelt sind, können die jeweiligen Dosierräder von einer anderen Dosierwelle angetrieben werden, als die Dosierräder unmittelbar benachbarter Dosiereinheiten. Entlang der Sämaschine kann sich auf diese Weise ein alternierender Antrieb hinsichtlich der zum Antrieb der jeweiligen Dosierräder genutzten Dosierwellen ergeben. Die Sämaschine kann in einem Wechselbetrieb mit alternierender Antriebsreihenfolge betrieben werden. Auf diese Weise kann beispielsweise die Aussaat mit einem erhöhten Abstand zwischen Saatreihen, in welchen Saatgut ausgebracht wurde, erzielt werden. Beispielsweise kann entlang einer ersten Arbeitsbahn nur eine erste Säwelle angetrieben werden, so dass eine Aussaat nur über die von ihr angetriebenen Dosiereinheiten erfolgt. Nach dem Wenden kann bei der Fahrt entlang der zweiten Arbeitsbahn diese erste Säwelle antriebsfrei geschaltet und nunmehr die zweite Säwelle angetrieben werden, so dass das Ausbringen des Saatguts nur über die von der zweiten Säwelle angetriebenen Dosiereinheiten erfolgt. Durch diesen alternierenden Antrieb kann verhindert werden, dass in die letzte Saatreihe der ersten Arbeitsbahn und die erste Saatreihe der zweiten Arbeitsbahn jeweils Saatgut ausgebracht wird und es zu Überlappungen trotz des eigentlich zu erzielenden doppelten Abstands zwischen Saatgut enthaltenen Saatreihen kommt. Sofern die Sämaschine eine ungerade Anzahl an Dosiereinheiten aufweist, kann beim weiteren Ausbringen des Saatguts durch den alternierenden Antrieb verhindert werden, dass in die letzte Saatreihe der zweiten Arbeitsbahn und die erste Saatreihe der dritten Arbeitsbahn jeweils Saatgut ausgebracht wird und es ebenfalls zu Überlappungen kommt. Sofern die Sämaschine eine gerade Anzahl an Dosiereinheiten aufweist, kann beim weiteren Ausbringen des Saatguts durch den alternierenden Antrieb verhindert werden, dass weder in die letzte Saatreihe der zweiten Arbeitsbahn noch in die erste Saatreihe der dritten Arbeitsbahn Saatgut ausgebracht wird und es zu einem größeren als den doppelten Abstand zwischen Saatgut enthaltenen Saatreihen kommt.

Zur Lösung der vorstehend genannten Aufgabe wird ferner ein Verfahren zum Ausbringen von Saatgut auf einer landwirtschaftlichen Nutzfläche mit einer in der zuvor beschriebenen Art ausgestalteten Sämaschine vorgeschlagen, bei welchem die landwirtschaftliche Nutzfläche mit der Sämaschine in mehreren parallelen Arbeitsbahnen und alternierend entlang entgegengesetzter Fahrtrichtungen abgefahren wird, wobei abwechselnd die von einer der Säwellen angetriebenen Dosierräder zur Dosierung des Saatguts je Arbeitsbahn genutzt werden. Es ergeben sich die im Zusammenhang mit der Sämaschine zum Ausbringen von Saatgut auf einer landwirtschaftlichen Nutzfläche beschriebenen Vorteile.

Weitere Einzelheiten und Vorteile einer erfindungsgemäßen Sämaschine sowie eines erfindungsgemäßen Verfahrens zum Ausbringen von Saatgut werden nachfolgend unter Zuhilfenahme der Figuren erläutert. Darin zeigen:
- Fig. 1a, 1b: Ansichten einer an eine landwirtschaftliche Zugmaschine angehängten Sämaschine mit einer ungeraden bzw. geraden Anzahl an Säeinheiten beim Ausbringen von Saatgut in mehreren jeweils mehrere Saatreihen aufweisenden Arbeitsbahnen;
- Fig. 2: eine perspektivische Detailansicht der erfindungsgemäßen Sämaschine;
- Fig. 3a, 3b: eine Rückansicht sowie eine geschnittene Ansicht einer Dosiereinheit der erfindungsgemäßen Sämaschine;
- Fig. 4a, 4b: Detailansichten der Sämaschine inklusive Antriebsmotoren;
- Fig. 5: ausschnittsweise, geschnittene Seitenansicht einer erfindungsgemäßen Sämaschine mit Antriebs- und Koppelelementen, und
- Fig. 6 bis 7: ausschnittsweise Rückansichten der erfindungsgemäßen Sämaschine zur Erläuterung des Wirkprinzips.

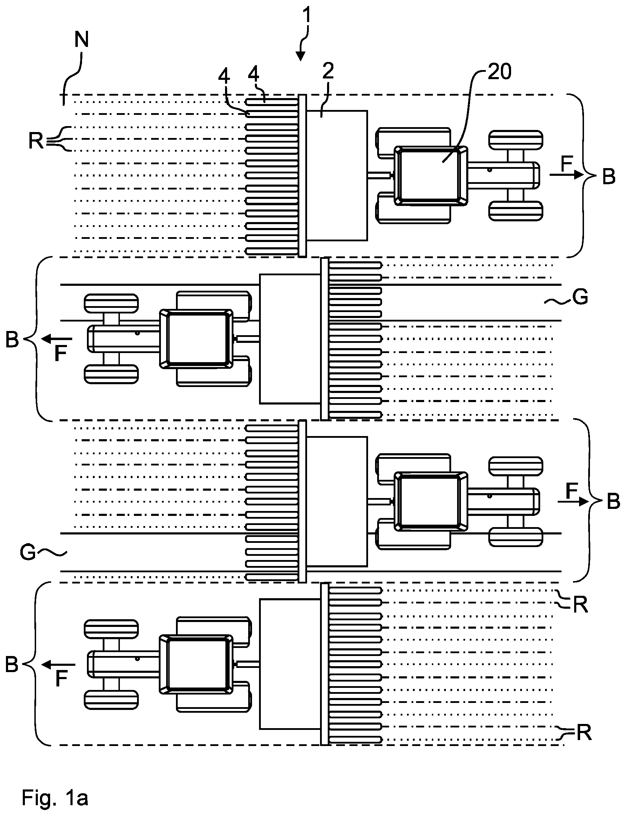

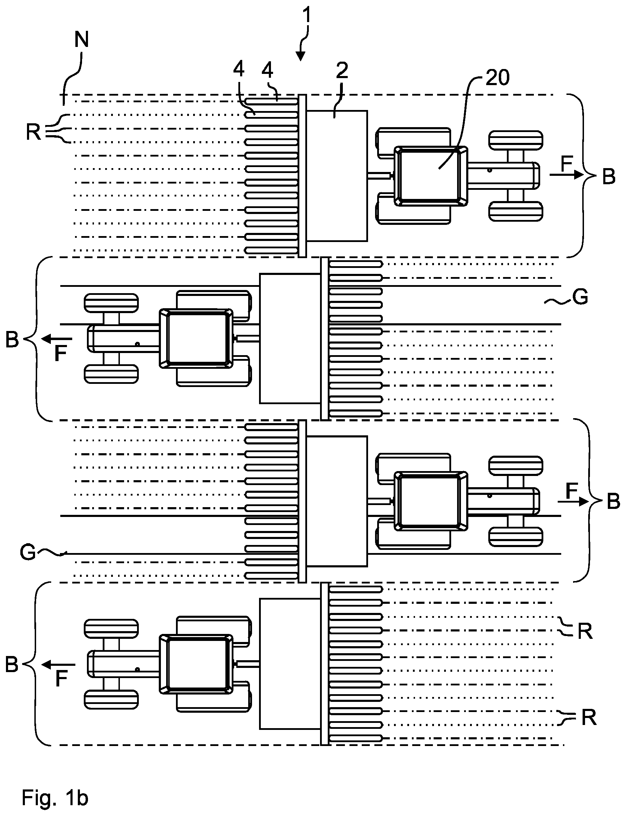

In Fig. 1 ist eine Sämaschine 1 gezeigt, welche von einer Zugmaschine 20 zum Ausbringen von Saatgut auf eine landwirtschaftlichen Nutzfläche N entlang mehrerer Arbeitsbahnen B über diese Nutzfläche gezogen wird. Alternativ zu dieser gezogenen Anordnung kann die Sämaschine 1 auch selbstfahrend ausgestaltet sein, so dass die Verwendung der Zugmaschine 20 entfallen kann. Die Sämaschine 1 weist einen Vorratsbehälter 2 auf, welcher das auszubringende Saatgut aufnimmt.

Um das Saatgut auszubringen, wird dieses von dem Vorratsbehälter 2 aus über in Fig. 1 nicht näher dargestellte Dosiereinheiten 3, welche das Saatgut in einzelnen festlegbaren Dosen abgeben, und über ebenfalls nicht dargestellte Rohrleitungen zu den einzelnen Säeinheiten 4 der Sämaschine 1 geführt. Diese von den Dosiereinheiten 3 mit Saatgut versorgbaren Säeinheiten 4 bringen das Saatgut jeweils in einer Saatreihe R auf der Nutzfläche N aus. Über eine Dosiereinheit 3 und eine Säeinheit 4 kann auf diese Weise eine Saatreihe R mit Saatgut versorgt werden.

Da die Breite der Sämaschine 1 in aller Regel kleiner ist als die Breite der gesamten Nutzfläche N, muss die Sämaschine 1 zum Ausbringen des Saatguts auf der gesamten landwirtschaftlichen Nutzfläche N in mehreren Arbeitsbahnen B über die Nutzfläche N bewegt werden, wie dies in Fig. 1 dargestellt ist. Dabei wird die Sämaschine 1 zunächst in Fahrtrichtung F entlang einer ersten Arbeitsbahn B über die Nutzfläche N gefahren, wobei die Breite der Arbeitsbahn B im Wesentlichen der Gesamtbreite sämtlicher Säeinheiten 4 quer zur Fahrtrichtung F entspricht. In der in Fig. 1 an oberster Stelle dargestellten Arbeitsbahn B erfolgt diese Bewegung entlang der Fahrtrichtung F von links nach rechts. Wird das Ende der Nutzfläche N erreicht, so wird die Sämaschine 1 gewendet und überquert anschließend die Nutzfläche N entlang einer zweiten Arbeitsbahn B in umgekehrter Fahrtrichtung F zur ersten Arbeitsbahn B. Auch am Ende dieser Arbeitsbahn B wird die Sämaschine 1 gewendet, um anschließend die Nutzfläche N in einer weiteren Arbeitsbahn B zu überqueren. Auf diese Weise wird die landwirtschaftliche Nutzfläche in entgegengesetzten Arbeitsbahnen B streifenförmig abgefahren, bis die gesamte Nutzfläche N überquert wurde.

Da die Nutzfläche N, das ausgebrachte Saatgut und die aus diesen wachsenden Pflanzen auch nach der Aussaat behandelt werden müssen, wozu weitere Gerätschaften genutzt werden, die sich in den Abmessungen ihrer Arbeitsbahnen und Spurabstände von denen der Sämaschine 1 und einer etwaigen Zugmaschine 20 unterscheiden können, wie beispielsweise Feldspritzen, werden bereits beim Ausbringen des Saatguts Fahrgassen G gebildet. Entlang dieser Fahrgassen G können diese weiteren Gerätschaften auch nach der Aussaat über die landwirtschaftliche Nutzfläche N bewegt werden, ohne dass sie dabei das Saatgut oder die aus diesem wachsenden Pflanzen beschädigen. Zur Erzeugung der Fahrgassen G wird über einzelne der Säeinheiten 4 der Sämaschine 1 kein Saatgut ausgebracht, so dass sich in den Fahrgassen G kein Saatgut und entsprechend auch keine aus dem ausgebrachten Saatgut erwachsende Pflanzen finden.

Da sich die Arbeitsbahnen solcher weiteren Gerätschaften sowie deren erforderliche Spurabstände, wie obenstehend beschrieben, von jenem der Sämaschine 1 und der Zugmaschine 20 unterscheiden, ist es nicht erforderlich, dass bei jeder Arbeitsbahn B der Sämaschine 1 eine Fahrgasse G gebildet wird. Über die Säeinheiten 4, welche zur Bildung der Fahrgasse G kein Saatgut ausbringen, wird bei Arbeitsbahnen B, welche keine Fahrgasse G aufweisen, ebenfalls Saatgut ausgebracht, wie dies für die oberste und unterste Arbeitsbahn in Fig. 1 gezeigt ist. Das Saatbild der Arbeitsbahnen B mit und ohne Fahrgasse G unterscheidet sich entsprechend, wie in Fig. 1 dargestellt.

Abhängig von dem auszubringenden Saatgut kann es hierüber hinaus erforderlich sein, dass entlang einer Arbeitsbahn B nur ein Teil der Säeinheiten 4 zum Ausbringen von Saatgut genutzt werden, während über die übrigen Säeinheiten 4 kein Saatgut ausgebracht wird. So lässt sich beispielsweise durch die Verwendung von jeder zweiten Säeinheit 4 zum Ausbringen von Saatgut der Abstand der Saatreihen R, in welchen Saatgut ausgebracht wird, verdoppeln. Bei der erfindungsgemäßen Sämaschine 1 werden die Dosiereinheiten 3 hierzu in einem Wechselbetrieb selektiv betrieben, so dass beispielsweise nur jede zweite Säeinheit 4 entlang einer Arbeitsbahn B mit Saatgut versorgt wird.

Zur Darstellung dieser Möglichkeit, den Abstand der Saatreihen R, in welche Saatgut ausgebracht wird, zu erhöhen, sind die Saatreihen R jeder Arbeitsbahn in Fig. 1 punktiert und strichpunktiert dargestellt. Entlang der in Fig. 1a und Fig. 1b an oberster Stelle dargestellten Arbeitsbahn B wird das Saatgut beispielsweise nur in den punktiert dargestellten Saatreihen R ausgebracht, während die strichpunktierten Saatreihen R saatgutlos bleiben. Die diesen strichpunktierten Saatreihen R zugeordneten Säeinheiten 4 werden hierzu von den ihnen zugeordneten Dosiereinheiten 3 nicht mit Saatgut versorgt und können zudem gegenüber der Nutzfläche N angehoben werden, so dass sie nicht mit dieser in Kontakt stehen.

Würde das Saatgut bei der Fahrt entlang der nächsten Arbeitsbahn B weiterhin über die gleichen Säeinheiten 4 ausgebracht werden, so würde es zu Doppelungen kommen, bei denen der Abstand der mit Saatgut versehenen Saatreihen R nicht erhöht ist.

In Fig. 1a, in welcher die Sämaschine 1 eine ungerade Anzahl an Dosiereinheiten 3 und eine ungerade Anzahl an Säeinheiten 4 aufweist, ist dies daran zu erkennen, dass die den äußeren Säeinheiten 4 der Sämaschine 1 zugeordneten, punktierten Saatreihen R aneinander angrenzender Arbeitsbahnen B direkt aneinandergrenzen.

In Fig. 1b, in welcher die Sämaschine 1 eine gerade Anzahl an Dosiereinheiten 3 und eine gerade Anzahl an Säeinheiten 4 aufweist, würden solche Dopplungen bei jedem zweiten Übergang zwischen aneinander angrenzenden Arbeitsbahnen B auftreten. Denn dort grenzen die einer der äußeren Säeinheiten 4 der Sämaschine 1 zugeordneten, punktierten Saatreihen R aneinander angrenzender Arbeitsbahnen B direkt aneinander. Dies wäre in Fig. 1b am Übergang zwischen der an oberster Stelle dargestellten ersten Arbeitsbahn B und der zweiten Arbeitsbahn B und am Übergang zwischen der dritten Arbeitsbahn B und der vierten Arbeitsbahn B der Fall.

Zudem käme es beim Ausbringen mit der in Fig. 1b gezeigten Sämaschine 1 bei den übrigen Übergängen zwischen aneinander angrenzenden Arbeitsbahnen B dazu, dass sowohl die letzte Saatreihe R einer Arbeitsbahn B als auch die erste Saatreihe R der folgenden Arbeitsbahn B saatgutlos bleiben. Denn dort grenzen die der anderen äußeren Säeinheit 4 der Sämaschine 1 zugeordneten, strichpunktierten Saatreihen R aneinander angrenzender Arbeitsbahnen B direkt aneinander. Dies würde an diesen Übergängen zu einem dreifachen statt einem doppelten Abstand zwischen den Saatgut enthaltenen Saatreihen R führen. In Fig. 1b wäre dies am Übergang zwischen der zweiten Arbeitsbahn B und der dritten Arbeitsbahn B der Fall.

Um solche Überlappungen und/oder zu große Abstände zu vermeiden, müssen nach dem Wenden und beim Fahren entlang der nächsten Arbeitsbahn B die jeweils anderen Säeinheiten 4 zu Aussaat genutzt werden, wobei die ihnen zugeordneten Dosiereinheiten 3 dann betrieben und die entlang der vorherigen Arbeitsbahnen B zur Dosierung des Saatguts genutzten Dosiereinheiten 3 nicht mehr betrieben werden. Dieser Wechselbetrieb wird durch die erfindungsgemäße Sämaschine 1 ermöglicht, bei welcher mehrere Säwellen 5, 15 zum Antrieb der Dosierräder 3.1 einzelner Dosiereinheiten 3 genutzt werden.

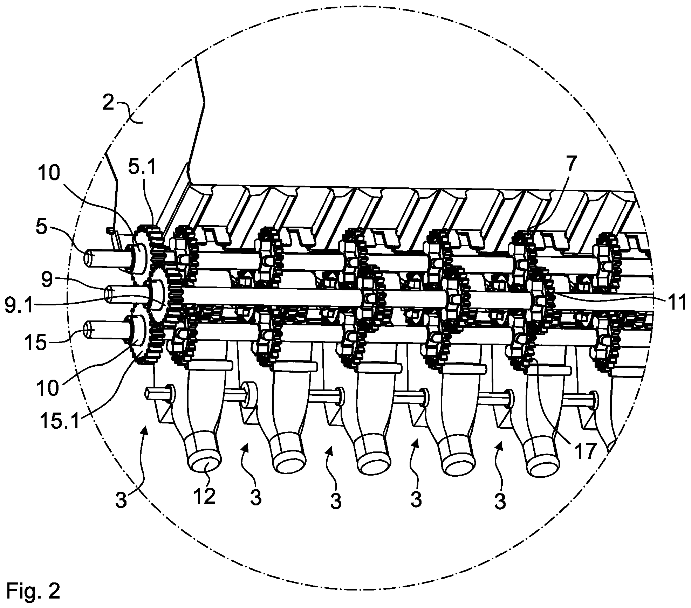

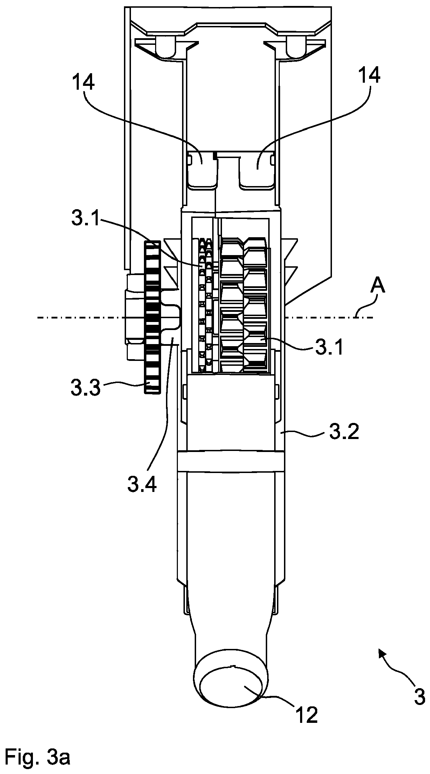

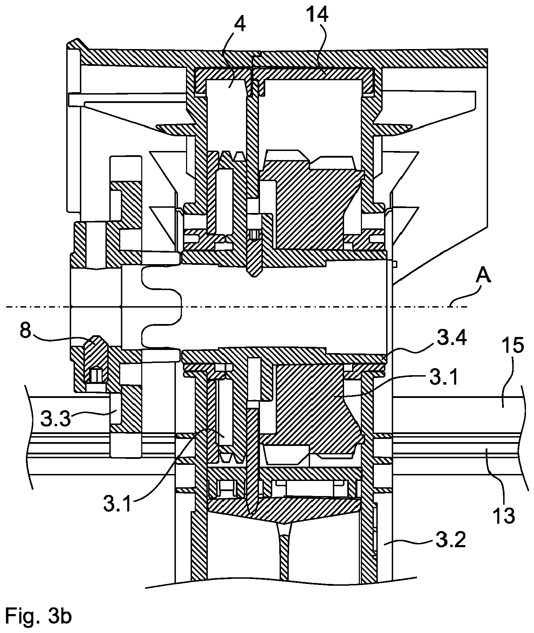

In Fig. 2 ist der Bereich der Sämaschine 1 um diese Dosiereinheiten 3 näher dargestellt. Gezeigt sind mehrere nebeneinander angeordnete Dosiereinheiten 3, welche jeweils mindestens ein frei drehbar um eine Lagerachse A gelagertes Dosierrad 3.1 aufweisen. Diese Dosiereinheit 3 wird nachfolgend im Zusammenhang mit den die Dosiereinheit 3 näher darstellenden Fig. 3a und Fig. 3b erläutert.

In Fig. 2 lässt sich neben dem Gehäuse der Dosiereinheiten 3 ihr Rohrleitungsanschluss 12 erkennen, über welchen eine Rohrleitung an die Dosiereinheit 3 angeschlossen werden kann. Über den Rohrleitungsanschluss 12 und die daran angeschlossene Rohrleitung kann das von der Dosiereinheit 3 dosierte Saatgut der dieser Dosiereinheit 3 zugeordneten Säeinheit 4 zugeführt werden.

Um das Dosierrad 3.1 der jeweiligen Dosiereinheiten 3 anzutreiben, weist die Sämaschine 1 mehrere Säwellen 5, 15 auf, welche zum wahlweisen Antrieb dieser frei drehbar gelagerten Dosierräder den Dosierrädern zugeordnet sind. Die frei drehbar gelagerten Dosierräder 3.1 der Dosiereinheiten 3 können dabei entweder von der Säwelle 5 oder der Säwelle 15 angetrieben werden. Hierzu weisen die zueinander parallel verlaufenden Säwellen 5, 15 als Zahnräder ausgestaltete Koppelelemente 7, 17 auf, über welche die Säwellen 5, 15 mit dem jeweiligen Dosierrad 3.1 kraft- und drehmomentübertragend gekoppelt werden können.

Jeder der in Fig. 2 dargestellten Dosiereinheiten 3 sind dabei nicht nur beide Säwellen 5, 15, sondern auch jeweils ein Koppelelement 7 der Säwelle 5 sowie ein Koppelelement 17 der Säwelle 15 zugeordnet. Wenngleich im dargestellten Ausführungsbeispiel sämtliche Dosiereinheiten 3 der Dosiermaschine 1 baugleich ausgestaltet sind, kann die Sämaschine 1 dennoch zusätzlich weitere Dosiereinheiten aufweisen, deren Dosierräder entweder nicht frei drehbar um die Lagerachse A gelagert sind und/oder denen nicht mehrere Säwellen zum wahlweisen Antrieb des Dosierrads zugeordnet sind.

Angeordnet sind die Dosiereinheiten 3 der Sämaschine 1 im unteren Bereich des Vorratsbehälters 2. Das im Vorratsbehälter 2 aufgenommene Saatgut kann gravitationsbedingt im Vorratsbehälter 2 nach unten rutschen und dort über Abgabeöffnungen des Vorratsbehälters 2 und im Bereich dieser angeordnete Aufnahmeöffnungen der Dosiereinheiten 3 in die Dosiereinheiten 3 eintreten.

Da die einzelnen Dosiereinheiten 3 und ihre Dosierräder 3.1 wahlweise von einer der Säwellen 5, 15 angetrieben werden können, ist mit dieser Sämaschine 1 zum einen der im Zusammenhang mit Fig. 1 beschriebene Wechselbetrieb jeder zweiten Dosiereinheit 3 zur Erzielung eines größeren Abstandes der mit Saatgut versehenen Saatreihen R möglich. Ebenso kann der Antrieb der Dosierräder 3.1 der Dosiereinheiten 3 derart gewählt werden, dass sämtliche der Dosierräder 3.1 über eine der Säwellen 5, 15 angetrieben werden, so dass mit der erfindungsgemäßen Sämaschine 1 auch weiterhin ein Betrieb wie bei bekannten Sämaschinen möglich ist, bei welchen sämtlichen Dosiereinheiten gemeinschaftlich über einen einzelnen Antrieb angetrieben werden.

Hierüber hinaus gestattet die erfindungsgemäße Sämaschine 1 zudem einen Betrieb, bei welchem die Dosierräder 3.1 zwar zum Teil mit der Säwelle 15 und zum Teil mit der Säwelle 5 gekoppelt sind, die entsprechend mit den Säwellen 5, 15 gekoppelten Dosierräder 3.1 und damit ihre Dosiereinheiten 3 jedoch bei der Fahrt entlang einer Arbeitsbahn B gleichzeitig betrieben werden. Dieser Betriebszustand gestattet es, die Dosierräder 3.1 der Sämaschine 1 gleichzeitig, jedoch mit unterschiedlichen Drehgeschwindigkeiten zu betreiben. Die unterschiedlich betriebenen Dosiereinheiten 3 können auf diese Weise zur Aussaat jeweils unterschiedlichen Saatguts eingestellt werden. Auf diese Weise kann in benachbarte Saatreihen R entlang einer Bearbeitungsbahn B unterschiedliches Saatgut ausgebracht werden, um beispielsweise zur Erzielung eines gleichzeitigen Anbaus unterschiedlicher Pflanzen in jeweils geordneten Saatreihen R auf der gleichen Nutzfläche N die gleichen Bereiche der Nutzfläche N nicht mehrfach zur Aussaat der unterschiedlichen Saatgüter überqueren zu müssen. Zu diesem Zweck kann der Vorratsbehälter 2 mehrere Vorratskammern aufweisen. Diese Vorratskammern können entweder einzelnen Gruppen von Dosiereinheiten 3 oder jeweils einzelnen Dosiereinheiten 3 zugeordnet sein, so dass die einzelnen Vorratskammern zur Aussaat unterschiedlicher Saatgüter jeweils eins dieser Saatgüter aufnehmen können.

Um Dosierräder 3.1 einzelner Dosiereinheiten 3 zur Bildung einer Fahrgasse G während der Aussaat, bei welcher die Dosierräder 3.1 über eine oder beide der Säwellen 5, 15 angetrieben werden, anhalten zu können, weist die in Fig. 2 dargestellte Sämaschine 1 zusätzlich eine Vorgelegewelle 9 auf. Diese Vorgelegewelle 9 wird entweder über einen eigenen Antriebsmotor angetrieben oder ist wie in Fig. 2 gezeigt, mit einer der Säwellen 5, 15 koppelbar, so dass die Vorgelegewelle 9 von dieser angetrieben wird.

Die Vorgelegewelle 9 ist über ihre Koppelelemente 11 mit den ihr zugeordneten Dosierrädern 3.1 der ihr zugeordneten Dosiereinheiten 3 in kraft- und drehmomentübertragender Weise gekoppelt, so dass die ihr zugeordneten Dosierräder 3.1 von der Vorgelegewelle 9 angetrieben werden. Bei der zu ihrem Antrieb mit einer der Säwellen 5, 15 gekoppelten Vorgelegewelle 9 werden die der Vorgelegewelle zugeordneten Dosierräder 3.1 auf indirekte Weise ebenfalls über die jeweilige Säwelle 5, 15 angetrieben. Um die der Vorlegewelle 9 zugeordneten Dosierräder 3.1 zur Bildung einer Fahrgasse G anzuhalten, wird die Vorgelegewelle 9 antriebsfrei geschaltet, wozu sie im dargestellten Ausführungsbeispiel der Sämaschine 1 über Kupplungen 10 von den Säwellen 5, 15 abgekoppelt wird.

Bevor nachfolgend näher auf den Antrieb der Dosierräder 3.1 der einzelnen Dosiereinheiten 3 eingegangen wird, soll zunächst der Aufbau der Dosiereinheiten 3, welche jeweils mindestens ein frei drehbar um eine Lagerachse A gelagertes Dosierrad 3.1 aufweisen, nähergehend anhand der Fig. 3a und Fig. 3b erläutert werden.

Die Dosiereinheit 3 weist ein Dosiergehäuse 3.2 auf, welches derart im unteren Bereich des Vorratsbehälters 2 angeordnet wird, dass die nicht dargestellte Aufnahmeöffnung im oberen Bereich des Dosiergehäuses 3.2 mit einer der Abgabeöffnungen des Vorratsbehälters 2 derart zusammenfällt, dass vom Vorratsbehälter 2 Saatgut durch die Aufnahmeöffnung in das Gehäuse 3.2 der Dosiereinheit 3 eintreten kann.

Um die Aufnahmeöffnung verschließen oder nur teilweise öffnen zu können, weist die Dosiereinheit 3 zudem mindestens einen Zulaufschieber 14 auf, mit welchem die Aufnahmeöffnung ganz oder teilweise blockiert werden kann. Da die dargestellte Ausführungsform der Dosiereinheit 3 zwei nebeneinander angeordnete und frei um eine Lagerachse A drehbar gelagerte Dosierräder 3.1 aufweist, weist die Dosiereinheit 3 zwei Zulaufschieber 14 auf, welche jeweils einem der Dosierräder 3.1 zugeordnet ist.

Die beiden Dosierräder 3.1 sind im Dosiergehäuse 3.2 nebeneinanderliegend angeordnet. Die Dosierräder 3.1, welche in Umfangsrichtung jeweils gegeneinander versetzte Zahnreihen aufweisen, unterscheiden sich in den Abmessungen ihrer zur Dosierung des Saatguts genutzten Dosierkammern, welche von den Zähnen dieser Zahnreihen begrenzt werden. Das in Fig. 3 links dargestellte Dosierrad 3.1 ist dabei auf die Dosierung von im Vergleich feinkörnigem Saatgut ausgelegt, während das in Fig. 3 rechts dargestellte Dosierrad 3.1 auf die Dosierung von im Vergleich grobkörnigem Saatgut ausgelegt ist. Während der Aussaat erfolgt die Dosierung des Saatguts in der Regel nur über eins dieser beiden Dosierräder 3.1, wobei der dem nicht genutzten Dosierrad 3.1 zugeordnete Zulaufschieber 14 geschlossen ist. An dem der Aufnahmeöffnung und den Zulaufschiebern 14 gegenüberliegenden Ende weist das Dosiergehäuse 3.2 den bereits beschriebenen Rohrleitungsanschluss 12 zum Anschluss einer der Zufuhr des dosierten Saatguts zu einer der Säeinheiten 4 dienenden Rohrleitung auf. Dieser Rohrleitungsanschluss 12 ist im dargestellten Ausführungsbeispiel einstückig mit dem Dosiergehäuse 3.2 ausgebildet.

Seitlich aus dem Dosiergehäuse 3.2 ist ein Antriebselement 3.3 herausgeführt, welches nach Art eines Zahnrads ausgebildet ist. Dieses Antriebselement ist mit einer Dosierwelle 3.4 gekoppelt, welches parallel zur Lagerachse A verläuft und dieses umfänglich umgibt.

In den Figuren ist die Lagerachse A lediglich als eine geometrische Achse dargestellt. Bei der erfindungsgemäßen Sämaschine 1 kann es sich bei der Lagerachse A ebenso lediglich um eine geometrische Achse handeln, da die Dosierräder 3.1 der Dosiereinheiten 3 jeweils über die Dosierwellen 3.4 im Dosiergehäuse 3.2 gelagert sein können. Alternativ ist es jedoch auch möglich, die Lagerachse A als ein bauliches Element auszugestalten, welches koaxial zur Dosierwelle 3.4 durch selbige verläuft.

Diese als bauliches Element ausgebildete Lagerachse A kann zudem selbst angetrieben sein und somit eine zusätzliche Antriebswelle darstellen. Um die Dosierräder 3.1 auch über diese Antriebswelle antreiben zu können, weist das Antriebselement 3.3 ein Verbindungsmittel 8 in Form einer Madenschraube auf. Über dieses Verbindungsmittel 8 kann das Antriebselement 3.3 drehfest mit dieser zusätzlichen Antriebswelle verbunden werden, so dass die Dosierräder 3.1 der Dosiereinheit 3 über das Antriebselement 3.3 und die Dosierwelle 3.4 von dieser zusätzlichen Antriebswelle wahlweise angetrieben werden können.

Die in Umfangsrichtung formschlüssig mit dem Antriebselement 3.3 verbundene Dosierwelle 3.4 treibt ihrerseits die Dosierräder 3.1 der Dosiereinheit 3 an. Das in Fig. 3 links dargestellte Dosierrad 3.1 ist einstückig mit der Dosierwelle 3.4 ausgestaltet. Das in Fig. 3 rechts dargestellte Dosierrad 3.1 weist hingegen in axialer Richtung in die Dosierwelle 3.4 eingreifende Vorsprünge auf, so dass dieses Dosierrad 3.1 formschlüssig mit der Dosierwelle 3.4 gekoppelt ist und über diese sowie das Antriebselement 3.3 angetrieben werden kann.

In Fig. 3b ist zudem die unterhalb der Lagerachse A verlaufende Säwelle 15 gezeigt. Zu erkennen ist dabei eine in Längsachse der Säwelle 15 verlaufende und sich nach Säwelleninnen erstreckende Nut 13 der Säwelle 15. Über diese Nut 13 können die Koppelelemente 17 der Säwelle 15 drehfest an der Säwelle 15 angeordnet werden.

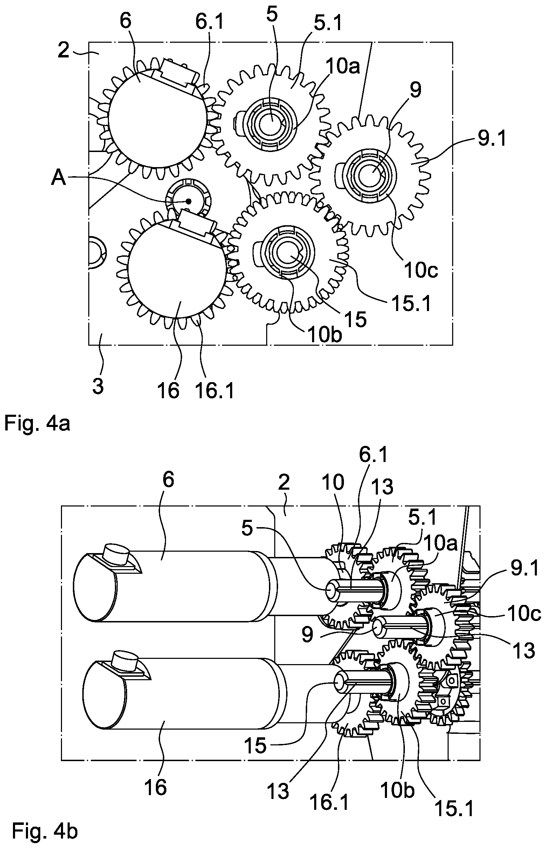

In Fig. 4a und Fig. 4b ist der Antrieb sowie die Kopplung der Säwellen 5, 15 sowie der Vorgelegewelle 9 gezeigt. Zu erkennen sind zwei Antriebsmotoren 6, 16, welche dem Antrieb der Säwelle 5 bzw. der Säwelle 15 dienen. Die dargestellten Antriebsmotoren 6, 16 sind beabstandet zu der ihr jeweils zugeordneten Säwelle 5, 15 angeordnet. In einer alternativen Ausgestaltung können die Antriebsmotoren 6, 16 jedoch auch koaxial zu der jeweiligen durch sie angetriebenen Säwelle 5, 15 angeordnet und insbesondere unmittelbar mit dieser verbunden sein.

Im dargestellten Ausführungsbeispiel weisen die Antriebsmotoren 6, 16 jeweils ein Abtriebsmittel 6.1, 16.1 auf, über welches eine vom Antriebsmotor 6, 16 erzeugte Antriebsbewegung auf die Säwelle 5, 15 übertragen wird. Dieses als Zahnrad ausgestaltete Abtriebsmittel 6.1, 16.1 steht im Eingriff mit dem ebenfalls als Zahnrad ausgestalteten Antriebsmittel 5.1, 15.1 der jeweiligen Säwelle 5, 15. Da jeder der Säwellen 5, 15 ein eigener Antriebsmotor 6, 16 zugeordnet ist, lassen sich die Säwellen 5, 15 separat zueinander antreiben.

Da es je nach Betriebszustand der Sämaschine 1 erforderlich sein kann, dass eine der Säwellen 5, 15 während der Aussaat nicht angetrieben wird, so dass die mit dieser Welle gekoppelten Dosierräder 3.1 ebenfalls nicht angetrieben werden und die entsprechenden Dosiereinheiten 3 kein Saatgut an die ihnen zugeordneten Säeinheiten 4 abgeben, ist diese Antriebsverbindung zwischen dem Antriebsmotor 6, 16 und der Säwelle 5, 15 jeweils lösbar ausgestaltet. Sowohl die Abtriebsmittel 6.1, 16.1 als auch die Antriebsmittel 5.1, 15.1 weisen eine Kupplung 10, 10a, 10b auf.

Über die Kupplungen 10 der Abtriebsmittel 6.1, 16.1 können die Abtriebsmittel 6.1, 16.1 jeweils in einen gegenüber der Motordrehachse der ihnen zugeordneten Antriebsmotoren 6, 16 frei drehenden Betriebszustand überführt werden. In diesem Betriebszustand wird eine etwaige Antriebsbewegung des Antriebsmotors 6, 16 nicht über das Abtriebsmittel 6.1, 16.1 auf das Antriebsmittel 5.1, 15.1 der jeweiligen Säwelle 5, 15 übertragen.

Wenngleich die Säwelle 5, 15 auf diese Weise gegenüber dem ihr zugeordneten Antriebsmotor 6, 16 antriebsfrei geschaltet werden kann, kann es je nach Betriebszustand der Sämaschine 1 dennoch erforderlich werden, das Antriebsmittel 5.1, 15.1 in einem gegenüber der Säwelle 5, 15 frei drehenden Betriebszustand zu überführen. Zu diesem Zweck weist sowohl das Antriebsmittel 5.1 als auch das Antriebsmittel 15.1 jeweils eine Kupplung 10a bzw. 10b auf, mit welchen das Antriebsmittel 5.1 bzw. 15.1 von der Säwelle 5 bzw. 15 entkoppelt werden kann.

Über diese Kupplungen kann zudem auch die Vorgelegewelle 9 wahlweise mit einer der Säwellen 5, 15 gekoppelt werden, um über diese angetrieben zu werden. Zu diesem Zweck weist die Vorgelegewelle 9 ebenfalls ein Antriebsmittel 9.1 auf. Auch dieses Antriebsmittel 9.1 ist nach Art eines Zahnrads ausgestaltet und kann insbesondere baugleich zu den Antriebsmitteln 5.1, 15.1 ausgestaltet sein.

Das Antriebsmittel 9.1 steht sowohl mit dem Antriebsmittel 5.1 der Säwelle 5 als auch mit dem Antriebsmittel 15.1 der Säwelle 15 in Eingriff. Ohne das Antriebsmittel 9.1 verschieben zu müssen, kann die Vorgelegewelle 9 auf diese Weise sowohl über die Säwelle 5 als auch über die Säwelle 15 angetrieben werden. Zur Vermeidung von Störungen durch unterschiedliche Drehzahlen der beiden Säwellen 5, 15 wird die Vorgelegewelle 9 zum Ausbringen von Saatgut zu jedem Zeitpunkt maximal von einer der Säwellen 5, 15 angetrieben. Gleichwohl lässt sich wählen, von welcher den Säwellen 5, 15 die Vorgelegewelle 9 angetrieben wird.

Da das Antriebsmittel 9.1 der Vorgelegewelle 9 mit beiden Antriebsmitteln 5.1, 15.1 gleichzeitig in Eingriff steht, ist ersichtlich, dass für einen Betrieb der Sämaschine 1, bei welchem nur die mit einer der Säwellen 5, 15 gekoppelten Dosierräder 3.1 angetrieben und zugleich keine Fahrgasse G gebildet werden soll, die Kupplung 10a, 10b des Antriebsmittels 5.1, 15.1 der nicht anzutreibenden Säwelle 5, 15 sowie die Kupplung 10 des dieser zugeordneten Abtriebsmittels 6.1, 16.1 betätigt werden müssen. Ansonsten würde es zu einem Blockieren oder Arbeiten entgegen des jeweils anderen Antriebsmotors 6, 16 sowie einem Antrieb der mit der eigentlich nicht anzutreibenden Säwelle 5, 15 gekoppelten Dosierräder 3.1 kommen.

Sollen beispielsweise nur die über die Säwelle 15 angetriebenen Dosierräder 3.1 zur Dosierung genutzt und zugleich keine Fahrgasse G gebildet werden, so versetzt der Antriebsmotor 16 über sein Antriebsmittel 16.1 und das Antriebsmittel 15.1 die Säwelle 15 in Rotation. Da keine Fahrgasse G gebildet werden soll, treibt die Säwelle 15 über ihr Antriebsmittel 15.1 und das mit diesem in Eingriff stehende Antriebsmittel 9.1 auch die Vorgelegewelle 9 und sämtliche mit dieser gekoppelten Dosierräder 3.1 an, welche indirekt über die Vorgelegewelle 9 somit auch von der Säwelle 15 angetrieben werden. Werden in diesem Betriebszustand die Kupplung 10 des Abtriebsmittels 6.1 und die Kupplung 10a des Antriebsmittels 5.1 nicht betätigt, so dass sich das Abtriebsmittel 6.1 nicht relativ zum Antriebsmotor 6 frei drehen könnte und das Antriebsmittel 5.1 drehfest mit der Säwelle 5 verbunden wäre, so würde die Säwelle 5 über dieses getriebeartige Zusammenspiel der Antriebsmittel 5.1, 9.1 und 15.1 in Rotation versetzt und so die mit der Säwelle 5 gekoppelten Dosierräder 3.1 ungewollt angetrieben werden. Die Drehbewegungen der Antriebsmittel 5.1, 9.1 und 15.1. würden zudem entgegen dem Widerstand des über sein Abtriebsmittel 6.1 mit dem Antriebsmittel 5.1 gekoppelten Antriebsmotors 6 erfolgen. Durch Betätigung der Kupplung 10 des Abtriebsmittels 6.1 und der Kupplung 10a würde das Antriebsmittel 5.1 und das Abtriebsmittel 6.1 im Wesentlichen widerstandslos in Rotation versetzt werden können, ohne dass sich diese Rotation auf die Säwelle 5 oder den Antriebsmotor 6 übertragen würde.

Sollte zudem eine Fahrgasse G gebildet werden, würde zusätzlich die Kupplung 10c betätigt werden. Da das Antriebsmittel 9.1 in diesem Zustand frei drehend auf der Vorgelegewelle 9 gelagert ist, würde sich die Drehbewegung des Antriebsmittels 9.1 nicht auf die Vorgelegewelle 9 übertragen. Die mit der Vorgelegewelle 9 gekoppelten Dosierräder 3.1 würden angehalten werden und den ihnen zugeordneten Säeinheiten 4 daher kein Saatgut zur Aussaat zuführen.

Neben einem solchen Betrieb der Sämaschine 1 über eine der Säwellen 5, 15, bei welcher der Antrieb der Vorgelegewelle 9 wahlweise hinzutreten kann oder nicht, gestattet diese getriebeartige Anordnung der Antriebsmittel 5.1, 9.1, 15.1 zudem einen über das Antriebsmittel 9.1 der Vorgelegewelle 9 vermittelten Antrieb beider Säwellen 5, 15 über einen einzelnen Antriebsmotor 6, 16. Im voranstehend beschriebenen Beispiel würde dabei lediglich die Kupplung 10 des Abtriebsmittels 6.1 gelöst werden, während das Antriebsmittel 5.1 über die Kupplung 10a weiterhin drehfest mit der Säwelle 5 gekoppelt wäre. Auf diese Weise ließe sich ein Antrieb beider Säwellen 5, 15 mit der gleichen Drehzahl und angetrieben über den gleichen Antriebsmotor 16 erzielen. In gleicher Weise könnte der Antrieb auch über den Antriebsmotor 6 erfolgen.

Zudem ist es in diesem Antriebszustand möglich, die mit der Vorgelegewelle gekoppelten Dosierräder 3.1 zur Erzeugung einer Fahrgasse G zu stoppen, indem die Kupplung 10c betätigt wird. Die Drehbewegung des Antriebsmittels 9.1 würde sich auf diese Weise nicht auf die Vorgelegewelle 9 übertragen. Da das Antriebsmittel 9.1 in diesem Zustand frei drehend auf der Vorgelegewelle 9 gelagert ist, könnte es jedoch weiterhin die Drehbewegung des Antriebsmittels 15.1 auf das Antriebsmittel 5.1 und somit die Säwelle 5 übertragen.

In Fig. 4b sind zudem die in Längsrichtung verlaufenden Nuten 13 der Säwellen 5, 15 sowie der Vorgelegewelle 9 zu erkennen. Über diese Nuten 13 können die Koppelelemente 7, 11, 17 drehfest an den Säwellen 5, 15 und der Vorgelegewelle 9 angeordnet werden.

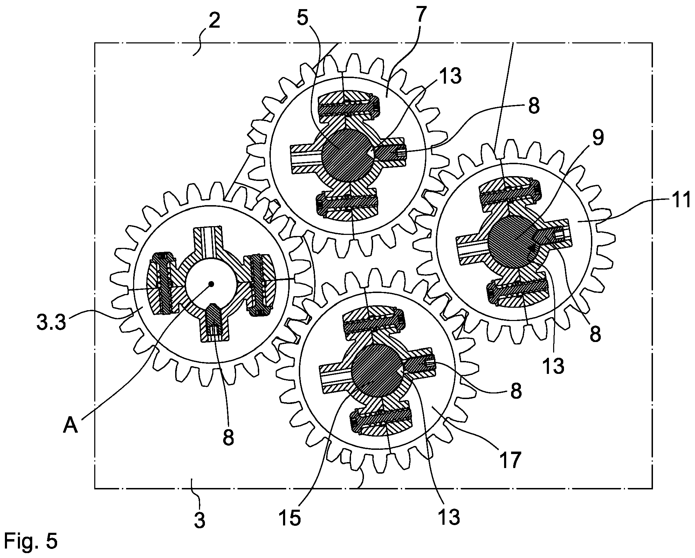

In Fig. 5 sind diese Koppelelemente 7, 11, 17 gezeigt. Zu erkennen ist, dass die Koppelelemente 7, 17 beider Säwellen 5, 15 mit dem Antriebselement 3.3 des Dosierrads 3.1 in Eingriff stehen. Zudem stehen diese Koppelelemente 7, 17 der Säwellen 5, 15 auch mit dem Koppelelement 11 der Vorgelegewelle 9 in Eingriff. Auf diese Weise bilden die Koppelelemente 7, 11, 17 und das Antriebselement 3.3 ein dem Dosierrad 3.1 zugeordnetes Zahnradgetriebe.

Wie auch das Antriebselement 3.3 weisen die Koppelelemente 7, 11, 17 jeweils ein Verbindungsmittel 8 auf, mit welchem diese wahlweise drehfest an der Säwelle 5, 15 bzw. der Vorgelegewelle 9 angeordnet werden können. Hierzu kann das als Madenschraube ausgestaltete Verbindungsmittel von dem Koppelelement 7, 11, 17 aus in Richtung der Säwelle 5, 15 bzw. der Vorgelegewelle 9 geschraubt werden, so dass das Verbindungsmittel 8 in die Nut 13 der jeweiligen Welle 5, 9, 15 eingreifen kann. In gleicher Weise kann das Verbindungsmittel 8 auch derart zurückgedreht werden, dass es nicht mehr in die Nut 13 hineinragt und das Koppelelement 7, 11, 17 frei drehbar an der Säwelle 5, 15 bzw. der Vorgelegewelle 9 angeordnet ist. Für jedes Koppelelement 7, 11, 17 kann daher individuell zwischen einer drehfesten und einer frei drehbaren Anordnung der Koppelelemente 7, 11, 17 gewechselt werden.

In der drehfesten Anordnung des Koppelelements 7, 11, 17 steht das Verbindungsmittel 8 derart mit der Welle 5, 9, 15 in Kontakt, dass das Koppelelement 7, 11, 17 durch das in die Nut 13 ragende Verbindungsmittel 8 in umfänglicher Richtung formschlüssig mit der Welle 5, 9, 15 verbunden ist. In axialer Richtung der Säwellen 5, 15 bzw. der Vorgelegewelle 9 ist das jeweilige Koppelelement 7, 11, 17 durch das Verbindungsmittel 8 kraftschlüssig mit der jeweiligen Welle 5, 9, 15 verbunden.

Über die beiden Koppelelemente 7, 17 kann das gezeigte Antriebselement 3.1 der Dosiereinheit 3 kraft- und formschlüssig mit den Säwellen 5 und 15 verbunden werden. In Fig. 5 ist dies für die gezeigte Dosiereinheit 3 aufgrund des gelösten Schlusses zwischen den Koppelelementen 7, 17 und den Säwellen 5, 15 jedoch nicht der Fall.

Gleichwohl sind die Koppelelemente 7, 17 beider Säwellen 5, 15 während der Aussaat durch den Eingriff der Zahnräder ineinander formschlüssig mit dem ihnen zugeordneten Antriebselement 3.3 verbunden. Das Gleiche gilt auch für die Antriebselemente 3.3 der übrigen Dosiereinheiten 3 der erfindungsgemäßen Sämaschine 1, deren frei um die Längsachse A drehenden Dosierräder 3.1 mehrere Säwellen 5, 15 zugeordnet sind.

Bei der in Fig. 5 dargestellten Dosiereinheit 3 besteht eine Antriebsverbindung zwischen der Vorgelegewelle 9 und den Dosierrädern 3.1 der Dosiereinheit 3. Zur Bildung einer Fahrgasse G wird das Dosierrad 3.1 dieser Dosiereinheit 3 daher antriebsfrei geschaltet, indem die Vorgelegewelle 9 nicht angetrieben wird und so das auf der Säwelle 3 frei drehende Dosierrad 3.1 stoppt.

Die Antriebsverbindung zwischen der Vorgelegewelle 9 und dem Dosierrad 3.1 der Dosiereinheit 3 erfolgt dabei zum einen über das Koppelelement 11, welches durch das in die Nut 13 eingreifende Verbindungsmittel 8 drehfest an der Vorgelegewelle 9 angeordnet ist. Hierüber hinaus erfolgt die Antriebsverbindung zwischen der Vorgelegewelle 9 und dem Dosierrad 3.1 über beide Koppelelemente 7, 17 der beiden Säwellen 5, 15. Diese beiden Koppelelemente 7, 17 sind frei drehbar an ihren jeweiligen Säwellen 5, 15 angeordnet. Dies ist daran zu erkennen, dass ihr jeweiliges Verbindungsmittel 8 nicht in die Nut 13 der Säwellen 5, 15 eingreift. Die Koppelelemente 7, 17 können somit frei gegenüber ihrer Säwelle 5, 15 drehen und die angetriebene Drehbewegung des Koppelelements 11 somit auf das Antriebselement 3.3 zum Antrieb des Dosierrads 3.1 übertragen.

Das aus dem Antriebselement 3.3 sowie den ihm zugeordneten Koppelelementen 7, 11, 17 bestehende Zahnradgetriebe weist eine rautenförmige Geometrie auf. Das Koppelelement 7 sowie die Säwelle 5 liegen dabei oberhalb einer die Lagerachse A mit der Vorgelegewelle 9 verbindenden Ebene, während das Koppelelement 17 und die Säwelle 15 unterhalb dieser Ebene liegen.

Während die gezeigte Ausführungsform der erfindungsgemäßen Sämaschine 1 eine einzelne Vorgelegewelle 9 aufweist, welche mit beiden Säwellen 5, 15 gekoppelt werden kann, kann bei einer alternativen Ausgestaltung der erfindungsgemäßen Sämaschine jeder Säwelle 5, 15 eine eigene Vorgelegewelle 9 zugeordnet sein. Jede der Säwellen 5, 15 kann dann jeweils mit der ihr zugeordneten Vorgelegewelle 9 gekoppelt werden. Die Koppelelemente 7, 17 würden bei einer solchen Ausgestaltung der Erfindung lediglich mit dem Koppelelement 11 der ihr jeweils zugeordneten Vorgelegewelle 9 in Eingriff stehen, nicht jedoch mit dem Koppelelement 11 einer ihr nicht zugeordneten Vorgelegewelle 9.

Im dargestellten Ausführungsbeispiel sind die Koppelelemente 7, 11, 17 baugleich ausgestaltet. Wie auch das Antriebselement 3.3 sind diese Koppelelemente 7, 11, 17 zweiteilig ausgestaltet. Dies ermöglicht eine einfache Montage der Koppelelemente 7, 11, 17 an den jeweiligen Wellen 5, 9, 15. Hierbei können die beiden im Wesentlichen halbkreisförmigen Teile der Koppelelemente 7, 11, 17 von gegenüberliegenden Seiten an die jeweilige Welle 5, 9, 15 angelegt und miteinander durch die gezeigten Schrauben verschraubt werden.

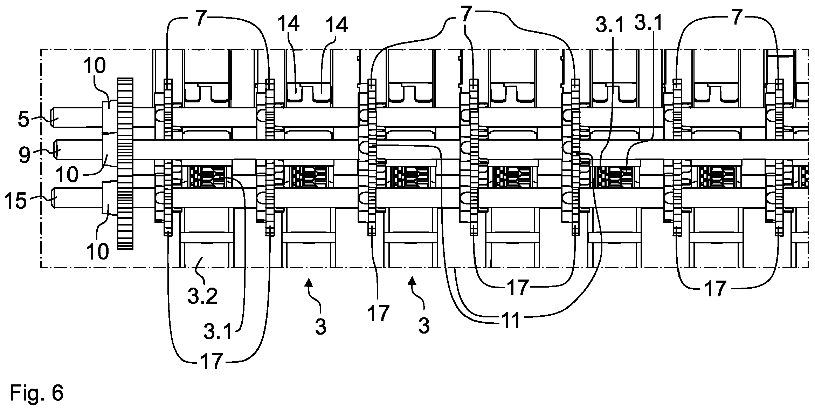

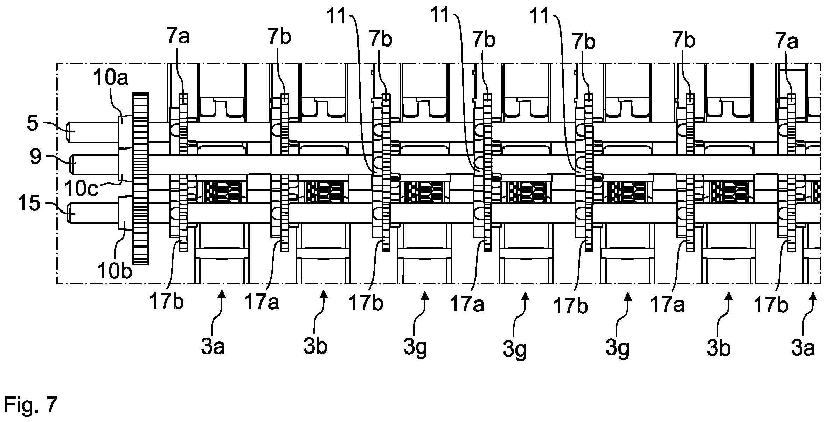

Anhand der Fig. 6 und Fig. 7 sollen einige Betriebszustände der erfindungsgemäßen Sämaschine 1 näher beschrieben werden, bei welchem eine erste Gruppe der Dosierräder 3.1 mit der Säwelle 5 in Antriebsverbindung und eine zweite Gruppe der Dosierräder 3.1 mit der Säwelle 15 in Antriebsverbindung stehen.

In den beiden die Sicht von den Säeinheiten 4 aus auf die Dosiereinheiten 3 zeigenden Fig. 6 und Fig. 7 können die beiden parallel zueinander verlaufenden Säwellen 5, 15 erkannt werden, welche sich quer zur Fahrtrichtung F erstrecken. Parallel zu den beiden Säwellen 5, 15 verläuft ebenfalls die Vorgelegewelle 9.

Neben den Säwellen zeigen die beiden Figuren sechs Dosiereinheiten 3 sowie den Teil einer siebten Dosiereinheit 3. Diese Dosiereinheiten 3 weisen jeweils zwei frei um die Längsachse A drehbar gelagerte Dosierräder 3.1 auf, welche gemeinschaftlich von dem Antriebselement 3.3 der jeweiligen Dosiereinheit 3 angetrieben werden können. Jeder dieser Dosierräder 3.1 sind sowohl die Säwelle 5 als auch die Säwelle 15 zugeordnet, wobei diese jeweils ein den Antriebselement 3.3 zugeordnetes Koppelelement 7, 17 aufweisen. Über diese Koppelelemente 7, 17 können die Dosierräder 3 wahlweise von der Säwelle 5 oder der Säwelle 15 angetrieben werden.

Den von links gezählt dritten, vierten und fünften Dosiereinheiten 3 ist neben den beiden Säwellen 5, 15 zudem auch die Vorgelegewelle 9 zugeordnet. Die Antriebselemente 3.3 dieser Dosiereinheiten 3 können ebenfalls über die ihnen zugeordneten Koppelelemente 11 der Vorgelegewelle 9 über diese angetrieben werden. Abhängig davon, ob die Dosierräder 3.1 dieser drei Dosiereinheiten 3 über die Vorgelegewelle 9 angetrieben oder von dieser angehalten werden, können diese drei Dosiereinheiten 3 Saatgut zum Ausbringen auf die Nutzfläche N dosieren bzw. eine Fahrgasse G bilden.

Die diesen drei Dosiereinheiten 3 zugeordneten Koppelelemente 11 sind drehfest mit der Vorgelegewelle 9 verbunden. Die ihnen ebenfalls jeweils zugeordneten Koppelelemente 7, 17 der beiden Säwellen 5, 15 sind hingegen an ihrer jeweiligen Säwelle 5, 15 frei drehbar angeordnet, wie dies obenstehend bereits im Zusammenhang mit der Fig. 5 beschrieben wurde. Die entsprechend frei drehbar an den Säwellen 5, 15 angeordneten Koppelelemente 7, 17 werden zur Verdeutlichung dieses Zustands in der Fig. 7 als Koppelelemente 7b, 17b bezeichnet. Mit Ausnahme dieser der Vorgelegewelle 9 zugeordneten Dosiereinheiten 3g sind die übrigen Dosiereinheiten 3 zum Antrieb mit den Säwellen 5, 15 gekoppelt. Dabei stehen unmittelbar benachbarte Dosiereinheiten 3 jedoch jeweils mit unterschiedlichen Säwellen 5, 15 in Antriebsverbindung.

So sind beispielsweise die Koppelelemente 7a, 17a drehfest an der jeweiligen Säwelle 5, 15 angeordnet. Auf diese Weise werden die in Fig. 7 gezeigten Dosiereinheiten 3a über die Koppelelemente 7a und das Antriebselement 3.3 von der Säwelle 5 angetrieben. Das dem Antriebselement 3.3 dieser Dosiereinheiten 3a zugeordnete Koppelelement 17b der Säwelle 15 ist an der Säwelle 15 hingegen frei drehend angeordnet.

In analoger Weise werden die Dosierräder 3.1 der Dosiereinheiten 3b über die drehfest an der Säwelle 15 angeordneten Koppelelemente 17a von der Säwelle 15 angetrieben. Die den Dosierrädern 3.1 dieser Dosiereinheiten 3b ebenfalls zugeordneten Koppelelemente 7b sind dabei frei drehend an der Säwelle 5 angeordnet.

Rechts der in Fig. 7 nur teilweise dargestellten rechten Dosiereinheit 3a würde sich aufgrund dieser alternierenden Antriebsreihenfolge eine weitere Dosiereinheit 3b anschließen. Ausgenommen der zur Fahrgassenbildung dienenden Dosiereinheiten 3g würde sich diese Reihenfolge der unmittelbar benachbarten Dosiereinheiten 3 in diesem Betriebszustand daher nach dem Muster "3a, 3b, 3a, 3b,3a," periodisch fortsetzen.

Beim Ausbringen des Saatguts entlang einer Arbeitsbahn B könnten beispielsweise die Dosiereinheiten 3b zur Erzielung eines größeren Abstands zwischen Saatreihen R mit darin befindlichem Saatgut nicht angetrieben werden. Ein Ausbringen des Saatguts würde entlang dieser Arbeitsbahn B nur über die angetriebenen Dosiereinheiten 3a und, insofern keine Fahrgasse G gebildet werden soll, auch über die Dosiereinheiten 3g erfolgen. Zu diesem Zweck würde die Kupplung 3b betätigt werden, so dass die Säwelle 15 und die von ihr angetriebenen Dosiereinheiten 3b nicht angetrieben werden. Die Kupplungen 10a und 10c blieben geschlossen, so dass die Säwelle 5 über den ihr zugeordneten Motor 6 angetrieben wird und über die Kopplung der Säwelle 5 mit der Vorgelegewelle 9 letztere ebenfalls angetrieben wird.

Sollte es entlang der Arbeitsbahn B erforderlich sein, eine Fahrgasse G zu bilden, so kann die Kupplung 10c zusätzlich betätigt, d. h. gelöst werden, so dass die Vorgelegewelle 9 und die dieser zugeordneten Dosiereinheiten 3g nicht angetrieben werden und kein Saatgut zur Aussaat abgeben.

Bei einem sich nach dem Wenden an die Arbeitsbahn B, bei welcher die Aussaat über die Dosiereinheiten 3a erfolgte, anschließende weitere Arbeitsbahn B, kann die Aussaat zur Vermeidung von bereits im Zusammenhang mit Fig. 1 beschriebenen Doppelungen über die Dosiereinheiten 3b erfolgen, welche dann von der Säwelle 15 angetrieben werden. Zu diesem Zweck wird die Kupplung 10b geschlossen, so dass die Säwelle 15 über ihren Antriebsmotor 16 angetrieben wird. Die Kupplung 10a hingegen wird geöffnet, so dass die Säwelle 5 sowie die mit dieser gekoppelten Dosiereinheiten 3a antriebsfrei geschaltet werden.

Abhängig davon, ob entlang dieser Arbeitsbahn B eine Fahrgasse G gebildet werden soll oder nicht, kann die Kupplung 10c zur Antriebsfreischaltung der Vorgelegewelle 9 durch Betätigung geöffnet werden oder in einer geschlossenen Stellung verbleiben, so dass die Vorgelegewelle 9 über die Antriebsmittel 9.1 und 15.1 von der Säwelle 15 angetrieben werden kann.

Die Kupplungen 10, 10a, 10b, 10c lassen sich in einer vorteilhaften Ausgestaltung der Sämaschine 1 zentral, insbesondere von einem Führerstand aus ferngesteuert, individuell betätigen. Dies gestattet eine einfache und zentrale Umschaltung zwischen den voranstehend beschriebenen Betriebszuständen der Sämaschine 1, bei welchen entweder die Dosiereinheiten 3a oder die Dosiereinheiten 3b jeweils in Verbindung mit oder ohne den Dosiereinheiten 3g zur Dosierung des Saatguts beim Ausbringen desselbigen genutzt werden. Während des Wendens der Sämaschine 1 zwischen zwei benachbarten Arbeitsbahnen B kann durch die zentral betätigbaren, insbesondere fernsteuerbaren Kupplungen 10, 10a, 10b, 10c ein schnelles und den Arbeitsfluss nicht behinderndes Umschalten zwischen diesen Betriebszuständen gewährleistet werden.

Mit der erfindungsgemäßen Sämaschine 1 und dem beschriebenen Verfahren zum Ausbringen von Saatgut mit einer solchen Sämaschine 1 können flexibel unterschiedliche Saatbilder mit der Sämaschine erzeugt werden, wodurch ihre Flexibilität gesteigert wird.

### Bezugszeichen

- 1: Sämaschine
- 2: Vorratsbehälter
- 3, 3a, 3b, 3g: Dosiereinheit
- 3.1: Dosierrad
- 3.2: Dosiergehäuse
- 3.3: Antriebselement
- 3.4: Dosierwelle
- 4: Säeinheit
- 5: Säwellen
- 5.1: Antriebsmittel
- 6: Antriebsmotor
- 6.1: Abtriebsmittel
- 7, 7a, 7b: Koppelelement
- 8: Verbindungsmittel
- 9: Vorgelegewelle
- 9.1: Antriebsmittel
- 10, 10a, 10b, 10c: Kupplung
- 11: Koppelelement
- 12: Rohrleitungsanschluss
- 13: Nut
- 14: Zulaufschieber
- 15: Säwellen
- 15.1: Antriebsmittel
- 16: Antriebsmotor
- 16.1: Abtriebsmittel
- 17, 17a, 17b: Koppelelement
- 20: Zugmaschine

- A: Lagerachse
- B: Arbeitsbahn
- F: Fahrtrichtung

- G: Fahrgasse
- N: Nutzfläche
- R: Saatreihe

## Patentansprüche

1. Sämaschine zum Ausbringen von Saatgut auf einer landwirtschaftlichen Nutzfläche (N), mit einem Vorratsbehälter (2) zur Aufnahme des Saatguts, mit mehreren nebeneinander angeordneten Dosiereinheiten (3, 3a, 3b, 3g), welche jeweils mindestens ein frei drehbar um eine Lagerachse (A) gelagertes Dosierrad (3.1) aufweisen, und von den Dosiereinheiten (3, 3a, 3b, 3g) mit Saatgut versorgbaren Säeinheiten (4) zur Aussaat des Saatguts,
**dadurch gekennzeichnet,**
**dass** den frei drehbar gelagerten Dosierrädern (3.1) der mehreren nebeneinander angeordneten Dosiereinheiten (3, 3a, 3b, 3g) jeweils mehrere Säwellen (5, 15) zum wahlweisen Antrieb der Dosierräder (3.1) zugeordnet sind.

2. Sämaschine nach Anspruch 1, **dadurch gekennzeichnet, dass** die Säwellen (5, 15) separat angetrieben sind.

3. Sämaschine nach einem der vorhergehenden Ansprüche, **dadurch gekennzeichnet, dass** die Säwellen (5, 15) über Koppelelemente (7, 7a, 7b, 17, 17a, 17b), insbesondere Zahnräder, wahlweise mit dem Dosierrad (3.1) in kraft- und/oder drehmomentübertragender Weise koppelbar sind.

4. Sämaschine nach einem der vorhergehenden Ansprüche, **dadurch gekennzeichnet, dass** die Dosiereinheiten (3, 3a, 3b, 3g), insbesondere seitlich aus Dosiergehäusen (3.2) der Dosiereinheiten (3, 3a, 3b, 3g) herausgeführte, Antriebselemente (3.3) zum Antrieb der frei drehbar um die Lagerachse (A) gelagerten Dosierräder (3.1) aufweisen.

5. Sämaschine nach Anspruch 4, **dadurch gekennzeichnet, dass** die jeweiligen Antriebselemente (3.3) über die Koppelelemente (7, 7a, 7b, 17, 17a, 17b) mit den Säwellen (5, 15) kraftschlüssig und/oder formschlüssig verbindbar sind.

6. Sämaschine nach einem der Ansprüche 4 oder 5, **dadurch gekennzeichnet, dass** die Koppelelemente (7, 7a, 7b, 17, 17a, 17b) sämtlicher Säwellen (5, 15) während dem Ausbringen des Saatguts kraftschlüssig und/oder formschlüssig mit den ihnen zugeordneten Antriebselementen (3.3) verbunden sind.

7. Sämaschine nach einem der Ansprüche 3 bis 6, **dadurch gekennzeichnet, dass** die Koppelelemente (7, 7a, 7b, 17, 17a, 17b) über einen lösbaren Kraftschluss und/oder einen lösbaren Formschluss an den Säwellen (5, 15) angeordnet sind.

8. Sämaschine nach einem der Ansprüche 3 bis 7, **dadurch gekennzeichnet, dass** jedem Koppelelement (7, 7a, 7b, 17, 17a, 17b) ein Verbindungsmittel (8) zugeordnet ist, mit welchem zwischen einer drehfesten und einer frei drehbaren Anordnung des Koppelementes (7, 7a, 7b, 17, 17a, 17b) an der Säwelle (5, 15) wechselbar ist.

9. Sämaschine nach einem der vorhergehenden Ansprüche, **gekennzeichnet durch** eine Vorgelegewelle (9), über welche der Vorgelegewelle (9) zugeordnete Dosierräder (3.1) zur Bildung einer Fahrgasse (G) während der Aussaat anhaltbar sind.

10. Sämaschine nach Anspruch 9, **dadurch gekennzeichnet, dass** die Vorgelegewelle (9) wahlweise mit einer der Säwellen (5, 15), insbesondere über eine elektrische Schlingfederkupplung (10, 10a, 10b, 10c), koppelbar ist.

11. Sämaschine nach einem der Ansprüche 9 oder 10, **dadurch gekennzeichnet, dass** die Säwellen (5, 15) jeweils eine Kupplung (10, 10a, 10b) zum Ankoppeln der Vorgelegewelle (9) aufweisen.

12. Sämaschine nach einem der Ansprüche 9 bis 11, **dadurch gekennzeichnet, dass** die Vorgelegewelle (9) mit den ihr zugeordneten Dosierrädern (3.1) über Koppelelemente (7, 7b, 17, 17b) der Säwellen (5, 15) in Antriebsverbindung steht.

13. Sämaschine nach einem der Ansprüche 9 bis 12, **dadurch gekennzeichnet, dass** ein Antriebselement (3.3) eines der Vorgelegewelle (9) zugeordneten Dosierrads (3.1), die dem Dosierrad (3.1) zugeordneten Koppelelemente (7, 7b, 17, 17b) der Säwellen (5, 15) und ein dem Dosierrad (3.1) zugeordnetes Koppelelement (11) der Vorgelegewelle (9) ein Getriebe, insbesondere ein Zahnradgetriebe, bilden.

14. Sämaschine nach einem der vorhergehenden Ansprüche, **dadurch gekennzeichnet, dass** die Dosierräder (3.1) benachbarter Dosiereinheiten (3, 3a, 3b), insbesondere ausgenommen der Dosierräder (3.1) der einer Vorgelegewelle (9) zugeordneten Dosiereinheiten (3g), zum Antrieb mit unterschiedlichen Säwellen (5, 15) kraftgekoppelt und/oder formgekoppelt sind.

15. Verfahren zum Ausbringen von Saatgut auf einer landwirtschaftlichen Nutzfläche (N) mit einer Sämaschine (1) nach einem der Ansprüche 1 bis 14, bei welchem die landwirtschaftliche Nutzfläche (N) mit der Sämaschine (1) in mehreren parallelen Arbeitsbahnen (B) und alternierend entlang entgegengesetzter Fahrtrichtungen (F) abgefahren wird, wobei abwechselnd die von einer der Säwellen (5, 15) angetriebenen Dosierräder (3.1) zur Dosierung des Saatguts je Arbeitsbahn (B) genutzt werden.
